# EUROPEAN PATENT APPLICATION

(11) **EP 4 650 514 A1**
(43) Date of publication of application: **19.11.2025**
(21) Application number: 25169882.5
(22) Date of filing: 10.04.2025
(51) Int. Cl.: D06N 3/14, D06N 3/04, D06N 3/00

(54) **METHOD FOR PRODUCING A MULTILAYER LAMINAR PRODUCT AND PLANT FOR IMPLEMENTING SAID METHOD**

(30) Priority: 22.04.2024 IT 202400009142
(71) Applicant: GE.MA.TA. S.p.A., 36070 Trissino (VI) (IT)
(72) Inventor: MAITAN, Gianni, 36070 TRISSINO (VI) (IT); ROVETTI, Mariano, 36050 MONTORSO VICENTINO (VI) (IT)
(74) Representative: Marchioro, Paolo

(57) **Abstract**

A method for producing a multilayer laminar product (6), comprising the operations of arranging a laminar support (1), covering a first face (1a) of the laminar support (1) with a first covering layer (2), consolidating, at least partially, this first covering layer (2). The method also provides for arranging a laminar element (4), covering a first face (4a) of the laminar element (4) with a second covering layer (3), consolidating the second covering layer (3), arranging above said laminar support (1) the laminar element (4) so that the first covering layer (2) and the second covering layer (3) are in contact with each other, pushing an embossed surface (107) against the first covering layer (2) and the second covering layer (3) with interposition of the laminar element (4) to imprint on the first covering layer (2) and on the second covering layer (3) the pattern of said embossed surface (107), and finally, after imprinting the pattern, causing the polymerization of the first covering layer (2) and of the second covering layer (3) to obtain a single stabilized covering layer (5).

## Description

The present invention relates a method for producing a multilayer laminar product particularly suitable for ennobling leathers.

The present invention also relates to a plant for implementing the aforesaid method.

As is known, leathers of any quality are finished in the tannery in the last processing step, before being used in the various industrial sectors, in particular in the footwear, clothing, furniture and automotive sectors.

This finishing process gives the leather specific mechanical and chemical-physical characteristics. In general, this finish gives greater resistance to abrasion and rubbing, and greater protection against water and light. In addition, this finish allows to change the tactile sensation of the leather surface and allows to achieve the desired final colouring.

The finish is also carried out on the grain of the leathers, but it is especially necessary on second and third choice leathers, which have a deteriorated surface due to the presence of cuts, scratches, insect bites or other anomalies. In fact, these second or third choice leather surfaces must be ground to make them uniform, with the consequence that the natural grain of the leather, which gives it its particular appearance, is removed. In addition, this grinding operation disadvantageously modifies the physical characteristics of the leather itself, such as softness, elasticity and tensile strength.

A similar process can also be used to give a fabric, synthetic or otherwise, a leather-like appearance, in which case we speak of "imitation leather". Obviously, what will be described below is also fully applicable to the latter process.

Generally, during the ennobling process an embossing is also printed on the surface of the product, in order to reproduce the grain similar to the natural one or obtain particular aesthetic effects that contribute to increasing the value of the product.

A known technique suitable for ennobling leathers provides for covering a laminar support, for example a leather to be ennobled, with a layer of water-based or solvent-based polyurethane resin. It is not excluded that such a resin may be a water-based or solvent-based acrylic resin. Therefore, in the following discussion, when indicating the polyurethane nature of the resin, it is to be understood that alternatively such resin may be an acrylic resin.

Subsequently, an embossed paper is compressed against the layer of polyurethane resin not completely polymerized and, therefore, still having a soft consistency, to imprint the pattern of the embossed paper on said layer.

The technique then provides for polymerizing the polyurethane resin so as to make it adhere stably to the laminar support, in particular to the leather.

After the resin has been polymerized, the embossed paper is removed from the laminar support so as to obtain the final product. To facilitate the removal of the paper and prevent it from adhering to the polyurethane resin, the embossed paper is previously covered with a protective film, also made of polyurethane, which, in addition to preventing direct contact between the polyurethane resin and the embossed paper, gives the leather its appearance and final resistance. This film becomes an integral part of the polyurethane resin during the polymerization described above.

The aforesaid known technique has some recognized drawbacks.

The first drawback is related to the maximum width available on the market of embossed paper, which does not exceed 2200 mm and which therefore does not allow to ennoble whole leathers with sizes of 3400-3600 mm wide.

Another major drawback is related to the cost of embossed paper, accentuated by the fact that the paper must have an adequate pulp and grammage to withstand the mechanical, chemical and thermal stresses produced during processing. Evidently, the cost of the embossed paper affects the cost of the manufacturing process.

To limit the costs related to the embossed paper, downstream of the polymerization process there is a device that removes the portion of film left on the embossed paper so that it can be reused. However, the aforesaid device contributes to the increase in the overall size and costs of the plant, as well as in the costs of the process.

A further drawback of the technique described above stems from the fact that the embossed paper with prolonged use loses its surface treatment and must therefore necessarily be replaced, contributing to further increase the process costs.

Another process known to ennoble leathers, in particular whole leathers with sizes up to 3400-3600 mm, is the one that provides for using a press with an embossing cylinder whose surface is protected by a thin film of untreated plastic material under which the laminar support is passed, on which a layer of polyurethane or acrylic resin has previously been spread and partially dried.

The drawback of this invention is that in any case the leather, at the outlet of the press, needs a further treatment of fixative to give it its strength and final appearance.

The present invention aims to overcome all the above-mentioned drawbacks inherent in the ennobling technique of known type described above and the related plants.

In particular, it is an object of the present invention to propose a method for producing a multilayer laminar product, the implementation of which is less expensive than analogous methods belonging to the prior art above all for ennobling whole leathers with sizes of 3400-3600 mm.

In particular, it is an object of the present invention to avoid the use of embossed paper.

This object also allows to obtain plants for the implementation of the aforesaid method which are less complex and therefore less expensive and more reliable than plants for the implementation of the methods belonging to the prior art, and above all allows to be able to ennoble large whole leathers, in particular of width comprised between 3400 mm and 3600 mm.

Furthermore, it is a further object of the invention to propose a method for producing a multilayer laminar product and the related plant that allow to obtain a completely finished product that is softer and therefore of higher quality than the products obtained with the ennobling methods of the prior art.

The above objects are achieved by a method for producing a multilayer laminar product, in particular an ennobled leather, in accordance with claim 1.

The aforesaid objects are also achieved by a plant for producing the aforesaid multilayer laminar product in accordance with claim 13.

Further detailed features of the invention are given in the dependent claims.

Advantageously, the fact of not using embossed paper allows to reduce the costs related to the latter.

The aforesaid objects and advantages, together with the others to be mentioned hereinafter, will be highlighted during the following description of a preferred embodiment of the invention which is given, by way of non-limiting example, with reference to the attached drawings, where:
- figs. 1(a)-1(h) schematically represent different steps of the method of the invention according to a first preferred embodiment, in the application to a laminar support;
- fig. 2 represents the plant of the invention, in side view.

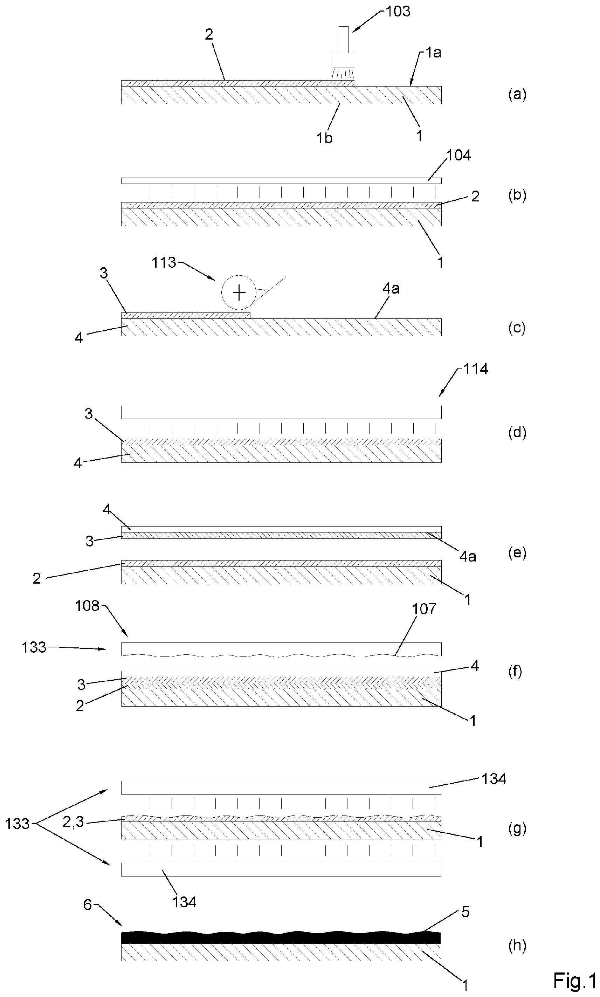

The method of the invention for producing a multilayer laminar product, indicated below with **6**, particularly suitable for ennobling leathers, provides for arranging a laminar support, indicated in fig. 1 with **1.** Preferably, the laminar support **1** is a leather, but the method of the invention can also be applied to other laminar supports, in particular to fabrics, synthetic or otherwise.

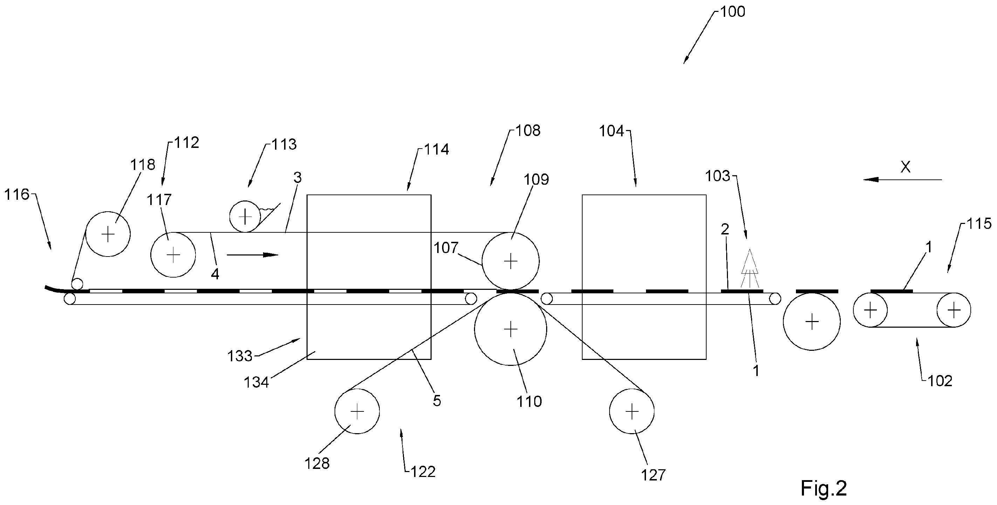

Preferably but not necessarily, the laminar support **1** is advanced in a plant **100**, also part of the invention, represented according to the preferred embodiment in fig. 2, according to an advancement direction **X** at a predefined advancement speed by a first feed device **102.** Preferably, the aforesaid first feed device **102** comprises a flexible element closed in a loop around a series of cylinders, on which the laminar support **1** is rested and which is advanced according to the aforesaid advancement direction **X.**

As regards the advancement speed, it is preferably but not necessarily in the range between 5 and 20 metres per minute, even more preferably between 8 and 14 metres per minute.

As can be seen in fig. 1(a), according to a first preferred embodiment of the method of the invention, a first face **1a** of the laminar support **1** is covered with a first covering layer **2** in a polymer resin, preferably but not necessarily comprising polyurethane.

Such polymer resin could alternatively be an epoxy or acrylic polymer resin or mixtures of acrylic, polyurethane or epoxy resins.

In addition, such resins could comprise additives in aqueous dispersion.

Still preferably, such polymer resin comprises pigments.

For the sake of simplicity, the aforesaid resin will hereinafter be referred to as polyurethane resin, highlighting that, alternatively, such resin could be acrylic, epoxy or mixtures of acrylic, polyurethane or epoxy resins.

The first covering layer **2** in water-based or solvent-based polyurethane resin is deposited on the laminar support **1**, preferably by spraying or by spreading with a blade or a cylinder on the first face **1a**, by means of a first applicator assembly **103** belonging to the plant **100.** The first applicator assembly **103** may comprise a series of spray nozzles arranged in a circle, which are rotated around the axis of the circle so as to intersect in succession the trajectory of the laminar support **1**, or which are moved with reciprocal motion and transversely to the trajectory of the laminar support **1.** Alternatively or in combination with the aforesaid spray nozzles, the first applicator assembly **103** may comprise a doctor blade or one or more spreader cylinders for spreading the polymer resin on the first face **1a**.

Preferably, the amount of such resin of the first covering layer **2** is comprised between 2 and 20 grams per square foot, more preferably this amount is comprised between 5 and 12 grams per square foot.

It should be noted that the unit of measurement grams per square foot was deliberately used in describing the amount of resin spread on the laminar support, even if this unit of measurement does not belong to the international system of units of measurement. Such choice is due to the fact that, for all intents and purposes, operators in the sector use this unit of measurement to define the aforesaid amount of resin. In any case, as known, it is wished to remind that a square foot corresponds to 929.03 cm². Therefore, this amount of resin could possibly also be expressed with the unit of measurement grams per cm², making the appropriate transformation of the above indicated values in grams per square foot into the respective values expressed in grams per cm².

As seen in fig. 1(b), the method of the invention, after the operation of covering the first face **1a** of the laminar support **1** with said first covering layer **2** in a polyurethane resin, with a "percentage of dryness" of 15-50%, preferably 20-30%, provides for partially consolidating said first covering layer **2**, for example causing a partial polymerization, in such a way as to give it a compact consistency, so as to obtain a consolidated covering layer. Preferably, partial consolidation takes place by heating with a first heater **104**, for example a battery of infrared lamps or a ventilated dryer with diathermic oil, steam or gas heating.

Preferably, said step of consolidating the first covering layer **2** by heating takes place at a temperature comprised between 35°C and 100°C, even more preferably between 45 °C and 70 °C.

In addition, this partial consolidation step provides for reducing the amount of water or solvent of the first covering layer **2** downstream of the first heater **104** by a percentage comprised between 40% and 95%, preferably between 60% and 80% with respect to the amount of water or solvent of said first covering layer **2** upstream of said heater **104.**

In order to verify the exact value of the reduction of the amount of water or solvent of the first covering layer **2,** without being affected by the loss of the amount of water of the first laminar support **1**, which normally has a variable humidity depending on the environmental humidity, it is necessary to:
- weigh two pieces of a square foot each of the aforesaid laminar support **1**, in order to define a tare weight;
- apply the covering layer **2** on one of the two square foot pieces of the aforesaid laminar support **1**;
- weigh upstream of the first heater **104** the square foot of the same laminar support **1** on which the first covering layer **2** is applied by means of the aforesaid first applicator assembly **103** and subtract the tare value from the latter value;
- weigh downstream of the first heater **104**, i.e. after the partial consolidation step, the square foot of the same laminar support **1** on which the first covering layer **2** is applied and subtract from the latter value the weight value of the other piece of square foot of laminar support **1** to which the covering layer **2** has not been applied after the latter has also been passed through the heater **104**;
- compare the two weight values relative to the laminar support **1** on which the covering layer **2** has been applied, upstream and downstream of the heater and without the relative tare weight, to verify the weight reduction in percentage of the second weight value compared to the first;
- knowing the chemical composition of the first covering layer **2** and the specific weights of the individual components that make up said first covering layer **2,** determine the percentage reduction in the amount of water or solvent of the first covering layer **2.**

Returning to the method of the invention according to the preferred embodiment, it provides for arranging above the first covering layer **2** a laminar element **4** provided with a first face **4a**, as indicated in fig. 1(e), so that said laminar element **4** is interposed between said first covering layer **2** and an embossed surface **107**, during the subsequent pressing step of the method of the invention.

With regard to the laminar element **4**, it must have sufficient yieldability to be able to transfer the embossing from the embossed surface **107** to the first covering layer **2.** The aforesaid property can be obtained by choosing a material that is strong enough to allow a very small thickness for the laminar element **4** and, at the same time, deformable and with a mechanical and thermal resistance compatible with use in the aforesaid process.

It has been found that materials particularly suitable to be used as a laminar element are high-density polyethylene, nylon, polyester and other equivalent materials, which have a relatively low cost and adequate mechanical and thermal resistance even with very reduced thicknesses, for example comprised between 5 µm and 50 µm, even more preferably between 8 µm and 25 µm, specifically with thickness between 10 µm and 18 µm. It is also evident that, in embodiment variants of the invention, the laminar element **4** can be made of any other material, provided that it has the properties mentioned above.

According to the invention, the aforesaid method, as indicated in fig. 1(c), before providing for arranging above the first covering layer **2** of said laminar element **4**, contemplates covering with a second covering layer **3** in material compatible with the first covering layer **2** the first face **4a** of the laminar element **4.**

Preferably but not necessarily, said second covering layer **3** may in turn be a water-based or solvent-based polyurethane or acrylic resin compatible with the polyurethane or acrylic resin with which the first covering layer **2** is made.

It is moreover evident that, in executive variants of the invention, any other material can be used as the second covering layer **3**, provided that it has the properties of adhesion and compatibility with the first covering layer **2.**

This second covering layer **3** is deposited on the first face **4a** by means of a second applicator assembly **113** belonging to the plant **100.** The second applicator assembly **113** may preferably comprise a scraper or an engraved cylinder for spreading the polymer resin on the first face **4a**.

It is not excluded, however, that this second applicator assembly **113** can comprise a series of spray nozzles arranged in a circle, which are rotated around the axis of the circle so as to intersect in succession the trajectory of the laminar element **4**, or which are moved with reciprocating motion and transversely to the trajectory of the laminar element **4.**

Preferably, the amount of such resin of the second covering layer **3**, once dried, is comprised between 0.2 and 5 grams per square foot, more preferably such amount is comprised between 0.5 and 2 grams per square foot.

Advantageously, the fact of covering the first face **4a** of the laminar element **4** with an amount of second covering layer **3**, such that when dried it is included in the aforesaid quantities, it allows to obtain a greater uniformity of the surface layer of the leather compared to the ennobling methods of the prior art, and therefore allows to obtain a finished leather, without the need to perform a subsequent finishing step.

As can be seen in fig. 1(d), the method of the invention, after the operation of covering the first face **4a** of the laminar element **4** with said second covering layer **3**, provides, as mentioned, for drying the latter. Preferably, drying and consolidation take place by heating with a second heater **114**, for example a battery of infrared lamps or a ventilated dryer with diathermic oil, steam or gas heating.

Preferably, said step of partial consolidation of the second covering layer **3** by heating takes place at a temperature comprised between 40 °C and 110 °C, even more preferably between 60 °C and 80 °C.

In addition, this partial consolidation step provides for reducing the amount of water or solvent of the second covering layer **3** downstream of the second heater **114** by a percentage comprised between 70% and 100% with respect to the amount of water or solvent of said second covering layer **3** upstream of the second heater **114.**

The measurement of this decrease must be carried out with the methodology indicated above.

Once these last two operations have been performed, the method provides, as mentioned above, for arranging above the first covering layer **2** present on the laminar support **1** such laminar element **4** with its first face **4a** treated with the second covering layer **3**, as described above.

In this regard, the Applicant has advantageously found that, by consolidating the second covering layer **3** before the coupling between the latter and the first covering layer **2**, the multilayer laminar product obtained at the end of the method of the invention has a higher softness than the multilayer laminar products obtained by performing the known methods.

Returning to the embossing step carried out by means of the embossed surface **107**, it should be noted that, since the embossing is imprinted on the first covering layer **2** and on the second covering layer **3** by the aforesaid embossed surface **107**, while the laminar element **4** serves only and exclusively to avoid direct contact between the embossed surface **107** and the polymer or polyurethane or acrylic resin, it is very advantageous to employ a thin laminar element **4** with a smooth surface.

In fact, a smooth laminar element can be selected from a wide range of commercially available materials, in large sizes and thin thicknesses including high density polyethylene or smooth nylon or smooth polyester. This also allows choosing the laminar element **4**, so as to minimize costs and/or maximize the quality of the multilayer product.

Preferably, the plant **100**, configured to allow the execution of this preferred embodiment of the method of the invention, provides that the laminar element **4** is supplied in the form of a tape and is advanced in the advancement direction **X** at a speed corresponding to the aforesaid advancement speed by a second feed device **112**, visible in particular in the detail of fig. 2. The advancement speed can vary between 5 m./min. and 20 m./min., even more preferably between 8 m./min. and 14 m./min.

Preferably, the second feed device **112** comprises a series of rollers that hold the laminar element **4** in tension and guide it according to a predefined trajectory, so as to bring it into contact with the laminar support **1.**

Even more specifically, said feed device **112** comprises a first reel **117** from which said tape of laminar element **4** is unwound and a second reel **118** on which said tape is wound after use, said first and second reels **117** and **118** being defined on the plant **100** so that the tape constituting the laminar element **4** is interposed between the laminar support **1** and the embossed surface **107**, when the thrust assembly **108** exerts the aforesaid thrust of the same embossed surface **107** against the second covering layer **3.**

Furthermore, as can be seen in fig. 2, the second applicator assembly **113** and the second heater **114** are interposed between said first reel **117** and the coupling area of the laminar element **4**, upstream of the embossed surface **107**, in such a way as to allow the covering of the first face **4a** of the same laminar element **4** with the aforesaid second covering layer **3** and the total consolidation of the latter, before the aforesaid coupling.

As already mentioned, subsequently the embossed surface **107**, arranged downstream of the first heater **104** according to the advancement direction **X**, is pushed against the first covering layer **2**, with interposition of the laminar element **4** provided with its own second covering layer **3**, in a thrust assembly **108**, as schematically represented in fig. 1(f).

During the aforesaid pushing operation, the pattern of the embossed surface **107** is imprinted on the first covering layer **2** and on the second covering layer **3**, as schematically represented in fig. 1(g). Preferably, the aforesaid thrust is exerted by an embossing cylinder with a force on the underlying material comprised between 10 kg/cm linear and 100 kg/cm linear, even more preferably between 30 kg/cm linear and 50 kg/cm linear.

Considering the actual contact area between the embossing cylinder and the laminar support **1**, the pressure value exerted by this embossing cylinder is comprised between 4 kg/cm² and 20 kg/cm².

Advantageously, the aforesaid force is sufficiently limited so as not to substantially alter the properties of the laminar support **1**, in particular its softness, which is very important in case the laminar support is made of leather.

Preferably and as can always be seen in fig. 2, the plant **100** of the invention provides that the embossed surface **107** belongs to an embossing cylinder **109**, rotatably mounted around its axis. Advantageously, the aforesaid embossing cylinder **109** can be kept constantly resting on the laminar support **1** allowing a continuous process to be carried out.

Preferably, the embossing cylinder **109**, during the compression step, rotates in the same advancement direction as the laminar element **4** with a peripheral speed between 5 m./min. and 20 m./min., even more preferably between 8 m./min. and 14 m./min.

Furthermore, preferably, the embossing in the embossed surface **107** of the embossing cylinder **109** has an engraving depth comprised between 2 µm-50 µm, in particular between 3 µm-35 µm.

Furthermore, still according to a preferred embodiment of the invention, the embossing cylinder **109** is made of a plastic material of polymer origin obtained through vulcanization or polymerization processes, for example materials such as Bakelite or Ebonite, the surface of which is laser engraved to define the aforesaid embossed surface **107.**

This advantageously allows to obtain a non-repetitive embossing surface **107**, unlike what happens with the realization of the embossed surface on metal cylinders by means of mechanical knurling techniques.

In any case, alternatively, the embossing cylinder **109** could be made of steel and have a chrome surface, which would give it high chemical resistance.

Even more in detail, said embossed surface **107** of the embossing cylinder **109** could have a surface roughness comprised between 0.025 µm and 1.5 µm, preferably from 0.05 to 0.5 µm.

It is also evident that, in embodiment variants of the invention not represented in the figures, the embossed surface **107** may belong to a device other than the aforesaid embossing cylinder, such as for example a die, or whatever.

Still preferably, there is a support surface opposed to the embossed surface **107** which, during the thrust, supports the laminar support **1** on the face opposite the first face **1a**. Preferably, the support surface belongs to a corresponding support cylinder **110**, mounted rotatably around its axis.

Furthermore, according to a preferred embodiment of the plant **100** of the invention, a third feed device **122** is provided comprising a series of rollers that hold in tension a further laminar element **5**, preferably a high-density polyethylene tape, nylon, polyester or other equivalent materials, and guide it according to a predefined trajectory, so as to interpose said second laminar element **5**, during the execution of the aforesaid pushing operation, between the support surface opposed to the embossed surface **107**, in particular between the support cylinder **110** and the lower face **1b** of the laminar support **1.**

Even more specifically, said third feed device **122** comprises in turn a first reel **127** from which the tape of the second laminar element **5** is unwound and a second reel **128** on which said tape is wound after use.

Advantageously, this further feature of the plant of the invention allows to avoid that any partially consolidated portion of the first covering layer **2** and/or of the second covering layer **3**, during the pushing operation, can protrude from the laminar support **1** and come into direct contact with the support surface opposed to the embossed surface **107**, in particular with the support cylinder **110.** This avoids damaging or soiling also the aforesaid support cylinder **110** during the embossing operation.

Preferably, the embossing cylinder **109** and the support cylinder **110** are arranged at a mutual distance less than the overall thickness of the laminar support **1**, of the first covering layer **2** and of the second covering layer **3**, so that the aforesaid elements are compressed as a result of their passage between the two cylinders **109**, **110.**

Still preferably, there is provided an adjustment device for modifying the aforesaid distance depending on the thickness of the laminar support **1** employed and the pressure required for thrust.

According to an executive variant of the invention, not represented in the figures, a plurality of interchangeable embossed surfaces could be provided, in turn provided with different surface patterns.

A possible embodiment to obtain the feature just described provides for arranging a plurality of embossing cylinders, each with a corresponding embossed surface, mounted on a revolver device so that they can be easily and quickly exchanged if necessary.

As can be seen in figs. 1(f) and 1(g), subsequently or simultaneously to the thrust of the embossed surface **107** against the laminar support **1**, a treatment assembly **133** causes the polymerization of the first covering layer **2** and of the second covering layer **3**, so as to obtain a single stabilized covering layer **5**, i.e. substantially solidified, as indicated in fig. 1(h).

Preferably, polymerization takes place by consolidation of the coupling, and still preferably said consolidation is carried out at a temperature comprised between 7 °C and 65 °C, still more preferably between 20 °C and 50 °C.

Advantageously, the temperature values indicated above are low enough not to alter the structure of the laminar supports **1** commonly used in the process, in particular the leathers, which therefore retain their softness.

Still preferably, the aforesaid consolidation begins in contact with the embossed surface **107**, to which a consolidation device is associated, which may comprise, for example, a cavity in contact with the embossed surface **107** and a circulation device that conveys a heat transfer fluid into the cavity.

Preferably, the polymerization is completed in a stabilization and consolidation chamber **134** arranged downstream of the thrust assembly **108** according to the advancement direction **X**, as can be seen both in fig. 1(h) with regard to the method, and in fig. 2 with regard to the plant **100.**

Advantageously, the fact of employing a low-cost material for the laminar element **4** entails the further advantage of making economically advantageous the application of the method of the invention and the relative plant configured to implement the aforesaid method.

In particular, in the case of the aforesaid low-cost smooth laminar element **4**, its use, compared to the use of paper with embossed surface, entails the advantage of being able to eliminate the same laminar element **4** after use, without having to recover it for subsequent use. This allows the laminar element **4** to be sized to withstand a single processing step and, therefore, allows its thickness to be minimized so as to further limit its cost and increase the quality of the processing.

The fact of not needing to reuse the laminar element **4** also avoids cleaning the latter, limiting the cost and overall size of the plant compared to known type plants.

It should also be reiterated that the Applicant has experimented and discovered that the combination of the specific characteristics of amount of the first covering layer **2** and of the second covering layer **3**, together with the specific thickness of the laminar element **4** and of the consolidation and polymerization temperatures described above, allows to obtain a product of optimal and better quality and softness, compared to the products obtainable with the known techniques. In particular, the low temperatures used by the method of the invention compared to those used by the prior art allow not to compromise the flexibility and softness of the leather, before its ennobling treatment.

Operationally, according to this preferred embodiment of the method of the invention, the laminar support **1** is spread on the flexible element of the first feed device **102** at a loading zone **115**, indicated in fig. 1.

The first feed device **102** thus advances the laminar support **1** according to the advancement direction **X** and at a predefined advancement speed towards the first applicator assembly **103**, where it is covered with the first covering layer **2.** The laminar support **1** thus covered is heated by the first heater **104** in order to partially consolidate the covering layer **2.**

Simultaneously with these operations on the laminar support **1**, the method of the invention provides for advancing along the second feed device **112** the laminar element **4**, towards the second applicator assembly **113**, where the same laminar element **4** is covered with the second covering layer **3.** The laminar element **4** thus covered is heated by the second heater **114** in order to fully consolidate the second covering layer **3.**

Subsequent to these operations on the laminar support **1** and on the laminar element **4**, the latter, provided with the second covering layer **3**, is arranged above the first covering layer **2**, so that the laminar support **1** covered by the aforesaid two covering layers **2** and **3** is conveyed between the embossing cylinder **109** and the support cylinder **110**, respectively with interposition of the aforesaid laminar element **4** and the second laminar element **5.** During this conveying, the embossed surface **107** is brought into contact with the first and the second covering layers **2** and **3**, with interposition of the laminar element **4**, so as to imprint the embossing on the same covering layers **2** and **3.**

The contact angle between the laminar support **1** and the embossing cylinder **109** may vary depending on the diameter of the embossing cylinder **109**, the production speed, the thickness of the first covering layer **2** and the second covering layer **3**, so as to consolidate the embossing of the aforesaid first covering layer **2.**

The contact with the surface of the embossing cylinder **109** also allows to exploit this surface, suitably brought to a certain temperature, to start polymerization and consolidation of the first covering layer **2** and the second covering layer **3.**

Preferably, the contact angle between the laminar support **1** and the embossing cylinder **109** is adjustable as required by means of a special adjustment device which, for example, acts by changing the position of the support cylinder **110** according to the advancement direction **X.** The variation of the aforesaid contact angle entails the variation of the contact time between the laminar support **1** and the embossing cylinder **109.**

Preferably, the polymerization is completed in the polymerization device **134** arranged downstream of the thrust assembly **108.**

Finally, at the exit from the aforesaid polymerization device **134** it is possible to unload the multilayer laminar product **6** from an unloading zone **116.**

If necessary, a further finishing station could be provided downstream of the detachment of the laminar element **4** from the laminar support **1.** This further finishing station is preferably equipped with one or more spray means or rollers for depositing a further covering layer above the first covering layer **2** and the second covering layer **3**, and a subsequent drying tunnel for consolidating this further covering layer.

From what has been said so far, it is understood that the method and the plant described above achieve all the intended objects.

In particular, the aim has been achieved of proposing a method for producing a multilayer laminar product, the implementation of which is less expensive than similar methods belonging to the prior art.

In particular, the aim of avoiding the use of embossed paper has been achieved.

This has made it possible to obtain plants for the implementation of the aforesaid method less complex and therefore less expensive and more reliable than plants for the implementation of the methods belonging to the prior art.

In addition, the aim of proposing a method for producing a multilayer laminar product and the related plant that allow obtaining a softer product and therefore of higher quality than the products obtained with the ennobling methods of the prior art is also achieved.

## Claims

1. Method for producing a multilayer laminar product (6), **characterized by** comprising the following operations:
- arranging a laminar support (1);
- covering a first face (1a) of said laminar support (1) with a first covering layer (2) in a water-based or solvent-based polyurethane or acrylic resin;
- consolidating, at least partially, said first covering layer (2), said consolidation step of said first covering layer (2) taking place by heating at a temperature comprised between 45 °C and 70 °C;
- arranging a laminar element (4);
- covering a first face (4a) of said laminar element (4) with a second covering layer (3) in a water-based or solvent-based resin compatible with said first covering layer (2);
- consolidating said second covering layer (3), said consolidation step of said second covering layer (3) taking place by heating at a temperature comprised between 60 °C and 80 °C;
- arranging above said laminar support (1) said laminar element (4) so that said first covering layer (2) and said second covering layer (3) are in contact with each other;
- pushing an embossed surface (107) against said first covering layer (2) and said second covering layer (3) with interposition of said laminar element (4) to imprint on said first covering layer (2) and on said second covering layer (3) the pattern of said embossed surface (107), said embossed surface (107) belonging to an embossing cylinder (109), said embossed surface (107), during the compression step, presenting a temperature between 20 °C and 50 °C;
- after imprinting said pattern, causing the polymerisation of said first covering layer (2) and said second covering layer (3) to obtain a single stabilized covering layer (5), said polymerisation step taking place in a stabilization and consolidation chamber (134) whose temperature is between 20 °C and 50 °C.

2. Method according to claim 1, **characterized in that** said second covering layer (3) in material compatible with said first covering layer (2) is composed of a water-based or solvent-based polyurethane or acrylic resin.

3. Method according to any one of the preceding claims, **characterized in that** said laminar support (1) comprises a leather and/or a fabric.

4. Method according to any one of the preceding claims, **characterized in that** said operation of covering said first face (1a) of said laminar support (1) with said first covering layer (2) in a polyurethane or acrylic resin provides for covering said first face (1a) with an amount of said first covering layer (2) comprised between 2 and 20 grams per square foot, more preferably said amount is comprised between 5 and 12 grams per square foot.

5. Method according to any one of the preceding claims, **characterized in that** said operation of covering said first face (4a) of said laminar element (4) with said second covering layer (3) provides for covering said first face (4a) with an amount of said dried second covering layer (3) comprised between 0.2 and 5 grams per square foot, more preferably said amount is comprised between 0.5 and 2 grams per square foot.

6. Method according to any one of the preceding claims, **characterized in that** said step of partial consolidation of said first covering layer (2) provides for reducing the amount of water or solvent of said first covering layer (2) downstream of said first heater (104) by an amount comprised between 40% and 95%, preferably between 60% and 80% with respect to the amount of water or solvent of said first covering layer (2) upstream of said heater (104).

7. Method according to any one of the preceding claims, **characterized in that** said step of drying (drying off) said second covering layer (3) provides for reducing the amount of water or solvent of said second covering layer (3) downstream of said second heater (114) by a percentage comprised between 70% and 100% with respect to the amount of water or solvent of said second covering layer (3) upstream of said second heater (114).

8. Method according to any one of the preceding claims, **characterized in that** said laminar element (4) is a laminar element of material selected from high density polyethylene, nylon or polyester with thickness comprised between 5 µm and 50 µm, even more preferably between 8 µm and 25 µm, specifically with thickness between 10 µm and 18 µm, said laminar element (4) having a smooth surface.

9. Method according to any one of the preceding claims, **characterized in that** the embossed surface (107) of said embossing cylinder (109), during the compression step, rotates in the same advancement direction as said laminar element (4) with a peripheral speed between 5 m./min. and 20 m./min., even more preferably between 8 m./min. and 14 m./min.

10. Method according to any one of the preceding claims, **characterized in that** said embossing cylinder (109) during said compression step exerts a force on the underlying material between 10 kg/cm linear and 100 kg/cm linear, even more preferably between 20 kg/cm linear and 50 kg/cm linear.

11. Method according to any one of the preceding claims, **characterized in that** said embossed surface (107) of said embossing cylinder (109) has an embossing with an incision depth comprised between 2 µm-50 µm, in particular between 3 µm-35 µm.

12. Method according to any one of the preceding claims, **characterized in that** said embossing cylinder (109) is made of a plastic material of polymeric origin obtained through vulcanization or polymerization processes, for example materials such as Bakelite or Ebonite, the surface of which is laser engraved to define said embossed surface (107).

13. Plant (100) for producing a multilayer laminar product (6), **characterized in that** it comprises in sequence, according to an advancement direction (X):
- a first feed device (102) for advancing a laminar support (1) at a predetermined advancement speed;
- a first applicator assembly (103) for covering a first face (1a) of said laminar support (1) with a first covering layer (2) in a water-based or solvent-based polymer, polyurethane or acrylic resin;
- a first heater (104) configured to consolidate said first covering layer (2) by heating at a temperature comprised between 45 °C and 70 °C;
- a second feed device (112) for advancing a laminar element (4) at a speed corresponding to said advancement speed;
- a second applicator assembly (113) for covering a first face (4a) of said laminar element (4) with a second covering layer (3) in water-based or solvent-based polyurethane or acrylic material;
- a second heater (114) configured to consolidate said second covering layer (3) by heating at a temperature comprised between 60 °C and 80 °C;
- a thrust assembly (108) comprising an embossed surface (107) arranged downstream of said first heater (104), configured to push said embossed surface (107) against said first covering layer (2) and said second covering layer (3), with interposition of said laminar element (4), so as to imprint on said first covering layer (2) and said second covering layer (3) the pattern of said embossed surface (107), said embossed surface (107) belonging to an embossing cylinder (109), said embossed surface (107), during the compression step, having a temperature between 20 °C and 50 °C;
- a treatment assembly (133) arranged downstream of said thrust assembly (108), configured to cause the polymerization of said first covering layer (2) and of said second covering layer (3) to obtain a single stabilized covering layer (5), said treatment assembly (133) comprising a stabilization and consolidation chamber (134) whose temperature varies between 20 °C and 50 °C.

14. Plant (100) according to claim 13, **characterized in that** said laminar element (4) is provided in the form of a tape, said second feed device (112) comprising a first reel (117) from which said tape of said laminar element (4) is unwound and a second reel (118) on which said tape of said laminar element (4) is wound, said first reel (117) and said second reel (118) being arranged in said plant (100) so that said tape of said laminar element (4) is interposed between said laminar support (1) and said embossed surface (107) when said thrust assembly (108) exerts said thrust of said embossed surface (107) against said second covering layer (3) applied on said laminar support (1).

15. Plant (100) according to any one of claims 13 to 14, **characterized by** providing a third feed device (122) for the advancement of a second laminar element (5) at a speed corresponding to said advancement speed, said second laminar element (5) being provided in the form of a tape, said third feed device (122) comprising a first reel (127) from which said tape of said second laminar element (5) is unwound and a second reel (128) on which said tape of said second laminar element (5) is wound, said first reel (127) and said second reel (128) being arranged in said plant (100) so that said tape of said second laminar element (5) is interposed between the lower face (1b) of said laminar support (1) and a support surface opposed to said embossed surface (107) when said thrust assembly (108) exerts said thrust of said embossed surface (107) against said first covering layer (2) and said second covering layer (3) applied on said laminar support (1).
